# EUROPEAN PATENT SPECIFICATION

(11) **EP 3 216 895 B1**
(45) Date of publication and mention of the grant of the patent: **23.01.2019**
(21) Application number: 16159909.7
(22) Date of filing: 11.03.2016
(51) Int. Cl.: C23F 11/08, C23F 11/10, C23F 11/167, C07F 9/09, C02F 5/14

(54) **PROCESS FOR PREPARING PHOSPHOTARTARIC ACID AND SALTS THEREOF**
VERFAHREN ZUR HERSTELLUNG VON PHOSPHOWEINSÄURE UND SALZEN DAVON
PROCÉDÉ DE PRÉPARATION D'ACIDE PHOSPHOTARTRIQUE ET DE SES SELS

(43) Date of publication of application: 13.09.2017
(73) Proprietor: Kurita Water Industries Ltd., Nakano-ku, Tokyo 164-0001 (JP)
(72) Inventor: LUNKENHEIMER, Rudolf, 55263 Wackernheim (DE); HATER, Wolfgang, 41564 Kaarst (DE); WOLF, Florian, 64646 Heppenheim (DE)
(74) Representative: Reitstötter Kinzebach

(56) References cited:
- WO-A1-2015/120871
- US-B1- 6 649 578
- FEODOR LYNEN ET AL: "Phosphor-d(+)-weinsäure", CHEMISCHE BERICHTE, vol. 85, no. 9-10, 14 October 1952 (1952-10-14), pages 905-912, XP055166822, ISSN: 0009-2940, DOI: 10.1002/cber.19520850913

## Description

The present invention relates to a process for preparing phosphotartaric acid and salts thereof. The compositions obtained by this process are useful for treating water in water-bearing systems, in particular as an additive for inhibition of formation of scale or inhibition of corrosion in water bearing systems.

### BACKGROUND OF THE INVENTION

The use of additives for water treatment in water-bearing systems is known from the prior art - see e.g. in Colin Frayne: Cooling Water Treatment, Chemical Publishing Co., New York 1999; Marie J. Alton: Chemical Treatment for cooling water, The Fairmont Press, Lilburn 1998; H.-D. Held, H., G. Schnell (editor): Kühlwasser [Cooling water], Vulkan-Verlag, Essen 1994; G. Schmitt (ed.): Korrosion in Kühlkreisläufen [Corrosion in cooling circuits], Verlag Irene Kuron, Bonn 1990; H.,G. Schnell, W.-D. Schnell: Kühlwasser [Cooling water], Vulkan-Verlag, Essen 2012.

A frequent problem in water-bearing systems is the corrosion of internal surfaces of the building components or system parts of the water bearing system, which are in permanent contact with the water or steam. A further frequently occurring problem is the formation of scale on these internal surfaces. The causes of these problems originate largely from the composition of the water, in particular from pH, oxygen and solid components contained in the water. Accordingly, additives are used in water-bearing systems for inhibiting corrosion and scale formation.

Oxygen binders, such as hydrazine, are frequently used for inhibiting corrosion. Hydrazine, for example, binds the oxygen present in the water or wet steam and is converted to nitrogen thereby inhibiting the corrosion of metal surfaces. The toxicity of hydrazine, however, is a particular disadvantage. Further examples of corrosion inhibitors are long-chain aliphatic amines, for example octadecylamine or polyamines such as oleyldipropylenetriamine and other film-forming amines, phosphates, phosphonates and heavy metals, such as zinc, molybdates, tungstates and chromates. A disadvantage of further corrosion inhibitors known from the prior art is their mostly selective effect, i.e. the known corrosion inhibitors selectively show a good effect on corrosion only for one metal or type of alloy. Certain corrosion inhibitors, for example, act either on ferritic steels and alloys or on non-ferrous metals.

Another problem in water-bearing systems is formation of scale, also termed scaling, scale-up, incrustation or fouling. Scaling is understood as an undesired deposition of solid materials, mostly salts such as water-insoluble oxides, hydroxides, carbonates, silicates, sulfates or phosphates, on surfaces of water-bearing systems, particularly on interfaces with heat transfer coefficients. These deposits and scales impair the function of water-bearing systems. In this case, this can lead in particular to the reduction of throughput in water-bearing systems caused by (in part) obstruction of pipelines, reduced heat/cooling transfer, local overheating of system parts and, hence, results in increased production stoppages due to required cleaning downtime.

Water-bearing systems are predominantly operated in circuits due to cost, processing and/or energy considerations, which frequently leads to an accumulation of scale-forming components if no discharge of these components from the water-bearing system and/or regulation of the solubility equilibrium conditions in the water-bearing system takes place. In addition, the concentration of these components in water-bearing systems may increase by evaporation processes, particularly at high process temperatures. If the concentration of the scale-forming elements rises above the saturation point, this will lead to precipitation of the scale forming elements, which may in turn form undesirable deposits. Moreover, the sedimentation of undissolved solids, which are introduced into the water-bearing system by the water, can lead to the formation of scale in the water-bearing system. A further example of fouling can be a settling out of bacterial plaques and/or algae which is also referred to as biological fouling. Both the elements which can cause encrustations and deposits and corrosion-triggering/corrosion-enhancing elements act as limiting factors for accumulation in water-bearing systems.

Scale formation and corrosion in water-bearing systems is influenced by numerous parameters such as the oxygen concentration, electrolyte content, pH, temperature, flow rate of the medium, etc., in water-bearing systems.

In this context, the carbonate hardness (deposit-forming) present in water-bearing systems and the chloride content present in water-bearing systems plays a role. While high carbonate hardness favours deposition of solids high chloride content causes or enhances corrosion. The concentrations of, for example, magnesium and calcium ions are also often determined separately and then referred to as magnesium hardness or calcium hardness.

Chemical water treatment methods for controlling carbonate and chloride content are known in the art. For example, carbonate and chloride contents can be reduced by means of ion exchangers or reverse osmosis. The formation of poorly-soluble precipitates of carbonate ions and polyvalent cations, such as magnesium or calcium ions, can also be suppressed by deposit-inhibiting compounds. In general, chemical fouling or scale inhibitors can reduce undesirable deposits in water-bearing systems, for example, by inhibition of the crystallization or else disrupting the deposition or consolidation stages of fouling processes.

Examples of scale inhibitors in water-bearing systems are chelating agents, such as EDTA and classical scale inhibitors like organic phosphonic acids such as HEDP (1-hydroxyethane-(1,1-diphosphonic acid)) or polyelectrolytes such as polyacrylic acid, polymethacrylic acid or copolymers of acrylic acid and maleic acid having low molecular weights. Once carbonate and chloride contents in water-bearing systems are under control, other ingredients of the water often come into focus for chemical treatment of water-bearing systems, which can only be insufficiently controlled by the known compounds. Sulfates, phosphates, fluorides, oxalates and above all silicates may also be the cause of problems, depending on the technical design of the water-bearing systems.

A disadvantage of the uses of corrosion inhibitors and scale inhibitors known from the prior art is that these additives can be used largely successfully either only for corrosion inhibition or only for scale inhibition in water-bearing systems. One exception here is the use of oligo-or polyphosphates and phosphonates, which, although acting as corrosion inhibitors and for preventing scale, have other disadvantages stated below. Oligophosphates and polyphosphates form calcium phosphate deposits after hydrolysis in hard water and many phosphonates are only poorly biologically degradable.

WO2015/120871 describes the use of phosphotartaric acid (PTA) and its salts in water-bearing systems. The phosphotartaric acid used therein was prepared according to the method specification of Lynen and Bayer, Chemische Berichte 1952, 85, 905-912.

A method for preparing phosphotartaric acid (PTA) was described by C. Neuberg, W. Schuchardt in Enzymologia Volume 1 1936, pp. 39 - 47. This method is based on the reaction of phosphorus (oxy)halides, such as POCl₃ with tartaric acid in aqueous media. Unfortunately this method is laborious, involves the use of corrosive phosphorus (oxy)halides and the yields of PTA are only low. Separation of PTA from non-reacted tartaric acid and polyphosphoric acid is hardly possible. Therefore, the process is uneconomic and not useful for preparing industrially relevant amounts of PTA

F. Lynen, H. Bayer (Chemische Berichte 1952, 85, 905 - 912) describe the synthesis of phosphotartaric acid according to a similar concept using dimethyl tartrate as starting material, which is reacted with phosphorus oxychloride followed by saponification of the obtained dimethyl ester.

US 6,649,578 relates to amphoteric phosphate esters for use in hair conditioning and hair cleaning compositions, which are obtained by reacting epoxysuccinic acid with a phosphate ester.

### SUMMARY OF THE INVENTION

There is an urgent requirement to provide a process for preparing phosphotartaric acid, herein after PTA, or its salts, which does not require corrosive reagents, such as phosphorus (oxy)halides, and organic solvents, such as pyridine. Moreover, the process should provide phosphotartaric acid or its salts in a good yield and allow for the preparation of PTA or its salts on an economically acceptable industrial scale.

It has now been found, surprisingly, that this object is achieved by process for preparing phosphotartaric acid and/or salts thereof as described herein and in the claims. The process comprises the reaction of epoxysuccinic acid or a salt thereof with an orthophosphoric acid source, the reaction being conducted in a mixture containing epoxysuccinic acid or a salt thereof, an orthophosphoric acid source and water as main constituents, where the orthophosphoric acid source is selected from phosphoric acid, the salts of phosphoric acid, phosphoric acid anhydrides, the salts of phosphoric acid anhydrides and phosphorpentoxide.

The process provides good yields of phosphotartaric acid or salts thereof, based on starting material epoxysuccinate. The process primarily yields an aqueous composition containing a salt of phosphotartaric acid. The composition may also contain a salt of tartaric acid and/or a salt of orthophosphoric acid as by-products. From the thus obtained composition, phosphotartaric acid or a salt thereof can be isolated or purified by conventional means, such as ion-exchange and selective crystallization. For example, orthophosphate may be selectively crystallized from the aqueous product mixture as a salt, in particular a sodium salt and removed by filtration. The final mixture also may contain minor amounts of salts of orthophosphoric acid and/or salts of tartaric acid, depending on the recipe and manufacturing process. However, it is also possible to use the composition without further purification. Rather, such a composition may have beneficial effects with regard to the inhibition of scaling and/or corrosion. Apart from that, the use of such a composition for the above-mentioned purposes avoids tedious workup of the reaction mixture.

The aqueous compositions, which are obtained by the process of the invention are useful as scale or corrosion inhibitors in water-bearing systems.

The phosphotartaric acid and the salts thereof obtained by the process of the present invention are effective and advantageous in corrosion inhibition combined with scale inhibition as described in WO 2015/120871. Moreover, phosphotartaric acid and the salts thereof, which are prepared according to the invention, show good biological degradability. In addition, in the process according to the invention, toxic phosphorus compounds such as phosphorus oxychloride and the use of organic solvents can be completely dispensed with.

Furthermore, the compositions which contain PTA or salts thereof and which are obtained by the process of the invention, in combination with further scale- or corrosion-inhibiting constituents, such as aliphatic di- and tricarboxylic acids, aliphatic mono- di- and/or polycarboxylic acids having at least one hydroxyl group, amino acids, salts and mixtures thereof, inorganic mono- and oligophosphates and water-soluble organic phosphonates, show the same synergistic effect, particularly in corrosion inhibition, as the phosphotartaric acid prepared according to the old literature method of Lynen and Bayer combined with the synergistic constituents mentioned above.

Moreover the composition according to the present invention, comprising PTA and the salts thereof and tartaric acid and salts thereof and/or orthophosphoric acid and salts thereof is effective in corrosion and scale inhibition without further purification.

### DETAILED DESCRIPTION OF THE INVENTION

Here and in the following, phosphotartaric acid is understood to mean a compound of the following formula A:

XO₂C-CH(O-PO₃X₂)-CH(OH)(CO₂X) Formula A

where X is a hydrogen atom. Salts of phosphotartaric acid (phosphotartrates) are those, wherein at least one of X, in particular at least two of X, are a metal atom, e.g. an alkalimetal atom, such as lithium sodium or potassium. In formula A, X is preferably equal to hydrogen, sodium and/or potassium. Of course, X in formula A can be identical or different. Preferred products are those, where at least two X are an alkalimetal atom, especially sodium and/or potassium.

The term orthophosphoric acid source, as used herein, means any phosphor(V) compound which under the reaction conditions is present or forms orthophosphate anions. Halogen-containing orthophosphoric acid sources, such as phosphoroxy halides, are not used.

According to the invention, the reaction is carried out in an aqueous reaction mixture, which initially contains epoxysuccinate, an orthophosphoric acid source and water as main constituents. The total amount of epoxysuccinate, orthophosphoric acid source and water is preferably at least 90 % by weight, based on the total weight of the reaction mixture.

Here and in the following, the term epoxysuccinate is meant to include epoxysuccinic acid and the salts thereof, in particular mono- and dialkali metal salts, such as epoxysuccinic acid monosodium salt, epoxysuccinic acid disodium salt, epoxysuccinic acid monopotassium salt and epoxysuccinic acid dipotassium salt and mixtures thereof. In the process of the invention, the epoxy succinate, i.e. epoxysuccinic acid or a salt thereof, is preferably the *cis*-epoxysuccinate or a mixture of *cis*-epoxysuccinate and trans-epoxysuccinate, which predominately contains the *cis*-epoxysuccinate. In particular epoxysuccinic acid or a salt thereof is used as a starting material, which mainly consists of *cis*-epoxysuccinate, more particular, where the cis/trans-ratio of the epoxysuccinate is at least 10:1. Especially, *cis*-epoxysuccinate is used as a starting material.

The term orthophosphoric acid source and/or salt thereof means any phosphor(V) compound which under the reaction conditions is present as orthophosphate ions or forms orthophosphate ions in the aqueous reaction mixture. Halogen-containing phosphate sources are not used.

Orthophosphoric acid sources are phosphoric acid (H₃PO₄) and the salts of phosphoric acid (orthophosphates) in particular the alkali metal salts, such as monosodium orthophosphate, disodium orthophosphate, trisodium orthophosphate, monopotassium orthophosphate, dipotassium orthophosphate and tripotassium orthophosphate.

Other orthophosphate sources are phosphoric acid anhydrides and the salts thereof, such as metaphosphates or polyphosphates, in particular the alkalimetal salts of metaphosphate and polyphosphates, such as the sodium or potassium salts of metaphosphates or polyphosphates, for example, because metaphosphates and polyphosphates decompose via hydrolysis into phosphates (synonymous with orthophosphate). Furthermore, phosphorpentoxide is used as an orthophosphate source. Preferred orthophosphate sources are phosphoric acid (H₃PO₄) and in particular the salts of phosphoric acid (orthophosphates) especially the alkali metal salts of phosphoric acid.

A preferred orthophosphoric acid source is an alkalimetal salt of phosphoric acid or a mixture of alkali metal salts of phosphoric acid, where the overall composition of the orthoposphoric acid source can be described by the following formula OS

A_{2+y}H_{1-y}PO₄ (OS)

where A represents an alkali metal ion, in particular sodium or potassium, and y is in the range from > 0 to 1, e.g. from 0.1 to 1, in particular in the range from 0.1 to 0.8 and especially in the range from 0.2 to 0.6.

The overall composition described by formula OS can be achieved e.g. by mixing a triphosphate of formula A₃PO₄ with phosphoric acid H₃PO₄ or with a mono- or dialkalimetal phosphate AH₂PO₄ or A₂HPO₄ or by neutralizing H₃PO₄ or a mono- or dialkalimetal phosphate AH₂PO₄ or A₂HPO₄ with an alkali metal hydroxide, e.g. with sodium or potassium hydroxide. It is apparent that y will affect the initial pH, i.e. the greater y is the higher the initial pH will be. In formula OS, A may be either Na or K or a combination of Na and K with arbitrary Na:K ratio. Particularly preferred, A is K or a combination of K and Na, wherein the molar ratio Na:K is preferably > 1.

Preferably, the reaction mixture has an initial pH of > pH 9.5, e.g. at least pH 9.6, in particular of at least pH 10, especially at least pH 11. The initial pH of the reaction mixture will generally not exceed pH 13.5, in particular pH 13 especially pH 12.5. In particular, the pH of reaction mixture is in the range from pH 9.6 to 13.5, in particular in the range from pH 10 to 13, in particular from pH 11 to 12.5. The pH of the initial reaction mixture is usually determined at 20°C, using a suitable pH measuring instrument, e.g. by using a pH-sensitive electrode.

During the reaction the pH of the reaction mixture may increase. The final pH will generally be higher than the initial pH and the final pH at the end of the reaction may be outside the range given above.

The reaction is conducted in water, i.e. in an aqueous solution of the reactants. The reaction of epoxysuccinate with the orthophosphoric acid source is usually achieved by heating the reaction mixture. The reaction temperature will generally be at least 50°C, preferably at least 60°C, in particular at least 70°C and especially at least 80°C. The reaction temperature will generally not exceed 100°C or 95°C. However, it may also be possible to apply higher reaction temperatures in pressurized vessels.

In the process of the invention, the orthophosphoric acid source and the epoxy succinate are preferably used in such amounts that the molar ratio of phosphor atoms in the orthophosphoric acid source to epoxysuccinate is in the range from 1:2 to 20:1, in particular from 1:2 to 5:1, more particularly from 1:1.5 to 3:1 and especially from 1:1.1 to 1.5:1.

To increase the yield of phosphotartaric acid and their salts and to reduce the formation of tartaric acid and their salts, it is advantageous to carry out the reaction at high concentrations of the reactants, in particular at the highest possible concentration. High concentration means that the amount of water is low. In particular the amount of water in the reaction mixture of the reaction of epoxysuccinate with the orthophosphoric acid source will not exceed 60% by weight, in particular 55% by weight, especially 50% by weight, based on the total weight of the reaction mixture. In particular the concentration of water in the reaction mixture will be in the range from 10 to 60% by weight, preferably from 20 to 55% by weight and especially from 30 to 50% by weight, based on the total weight of the reaction mixture. High concentrations of the reactants can be achieved, for example, by providing dilute solutions of the reactants and removing water before or during the course of the reaction. It may also be possible to prepare epoxysuccinate in situ by epoxidation of maleic acid or fumaric acid, hereinafter also termed the first stage, at a high concentration or by processing the first stage such that some of the water is removed by distillation, or water is distilled off in the course of the reaction of the epoxysuccinate with the orthophosphoric acid source.

In a preferred embodiment of the process according to the invention, the process also comprises the preparation of epoxysuccinic acid or the salt thereof, e.g. the sodium and/or potassium salt of epoxysuccinic acid, as an upstream stage, hereinafter also termed "first stage", followed by the reaction of the thus obtained epoxysuccinate in a subsequent (second) stage. In the first stage, the epoxysuccinate is preferably prepared by epoxidation of maleic acid or fumaric acid or salts thereof. Preferably, the epoxysuccinate, in particular the sodium or potassium salt of epoxysuccinic acid or a mixed sodium/potassium salt of epoxysuccinic acid with arbitrary Na/K-ratios can be prepared. There is no need to isolate the epoxysuccinate from the reaction mixture obtained in the epoxidation reaction. Rather, it is preferred to directly subject the thus obtained epoxysuccinate to the reaction with the orthophosphoric acid source by the process described herein without prior isolation of the epoxysuccinate. In particular, the reaction of the epoxysuccinate and the orthophosphoric acid source is performed in the reaction mixture obtained from the preparation of epoxysuccinic acid.

Epoxidation can be simply achieved by reacting maleic acid or fumaric acid or a salt thereof with hydrogen peroxide, preferably in the presence of a transition metal compound, in particular a transition metal compound containing chromium, molybdenum or tungsten, where the transition metal is preferably in the oxidation state VI. In a particular preferred embodiment, the transition metal compound is a tungsten compound, in particular a tungsten compound, where tungsten is in the oxidation state VI. Examples include tungsten(VI)oxide, salts of tungstic acid, such as Na₂WO₄, including the hydrates thereof, or the corresponding ammonium salts of tungstic acid. The epoxidation can be performed by analogy to the methods described in K. A. Jorgensen, Chem. Rev. 1989, 89, pp 431 - 458, and in the references cited therein, or in particular in analogy to the method of Payne and Williams, which is described in the Journal of Organic Chemistry 1959, 24, 54 - 55. The epoxidation is preferably performed in water. In particular, the epoxidation is performed in water with pH control, e.g. at pH in the range of pH 4 to 7, especially in the range of pH 5.5 to 6. Preferably, In addition to pure sodium salts, in a deviation from the method cited, pure potassium salts or mixed salts of sodium and potassium can also be prepared with any desired Na:K ratio. Preference is given to using an epoxidized maleic acid salt or fumaric acid salt (i.e. epoxysuccinic acid) for preparing the phosphotartaric acid and their salts. In particular, maleic acid or a salt of maleic acid is epoxidized, which results in the cis-epoxysuccinic acid or the salt thereof. The salt of maleic acid can be prepared in situ by reacting maleic acid anhydride with water or an aqueous solution of an alkali metal hydroxide such as sodium or potassium hydroxide.

As pointed out above, tartaric acid or a salt of tartaric acid may be formed as a by-product. Depending on the amount of orthophosphoric acid source, the reaction mixture may also contain orthophosphoric acid or a salt thereof. Although it is possible to isolate phosphotartaric acid or their salts from the reaction mixture, for most purposes, this will not be necessary. In particular for use in water conducting systems it may be useful to apply the reaction mixture without isolation of phosphotartaric acid or their salts. The reaction mixtures obtainable by the process of the invention may mainly consist of, except for water:
a) one or more salts of phosphotartaric acid, and
b) one or more salts of tartaric acid;
or mainly consist of:
a) one or more salts of phosphotartaric acid,
b) one or more salts of tartaric acid, and
c) one or more salts of orthophosphoric acid.
or mainly consist of:
a) one or more salts of phosphotartaric acid and
b) one or more salts of orthophosphoric acid.

In this context, "mainly consists", means that the composition contains at least 90% by weight, in particular at least 95% by weight or at least 98% by weight of component a) and at least one of components b) and/or c), based on the total weight of the composition, except for water.

The compositions may contain smaller amounts of one or more salts of maleic acid or fumaric acid as a component d). The amount of component d) will generally not exceed 10% by weight, in particular 5% by weight or 2% by weight, respectively.

Based on the reaction conditions, the reaction mixtures obtainable by the process of the invention may mainly consist of, except for water:
a) 20 to 90% by weight, in particular 40 to 60% by weight, based on the total amount of components a), b) and c) one or more salts of phosphotartaric acid,
b) if present, 5 to 60% by weight, in particular 20 to 30% by weight, based on the total amount of components a), b) and c) one or more salts of tartaric acid, and
c) if present, 5 to 60% by weight, in particular 20 to 30% by weight, based on the total amount of components a), b) and c) one or more salts of orthophosphoric acid,
d) 0 to 10% by weight, in particular 0 to 2% by weight, based on the total amount of components a), b) and c) one or more salts of maleic or fumaric acid.

The total concentration of components a), b), c) and d) in the aqueous composition may be in the range from 5 to 85% by weight, in particular in the range from 40 to70% by weight, based on the total weight of the aqueous composition.

If desired, isolation of phosphotartaric acid or their salts from the reaction mixture may be achieved by conventional methods, e.g. by a treatment of the reaction mixture with strongly acidic cation exchange resin and/or recrystallization.

The following examples illustrate the process according to the invention in more detail.

¹H-NMR analysis data were recorded in D₂O using a Bruker Avance DRX 300 spectrometer at 300 MHz. Relative amounts were determined by integration of the signals at 5.96 ppm (2H) (maleate), and 4.29 ppm(2H) (tartrate), and 4.15-4.20 (1H) and 4.50-4.60 ppm (1H) (posphotartrate) and 3.56 ppm (2H) (epoxy succinate) (all values are examples for measurement at a pH of approx. 10)

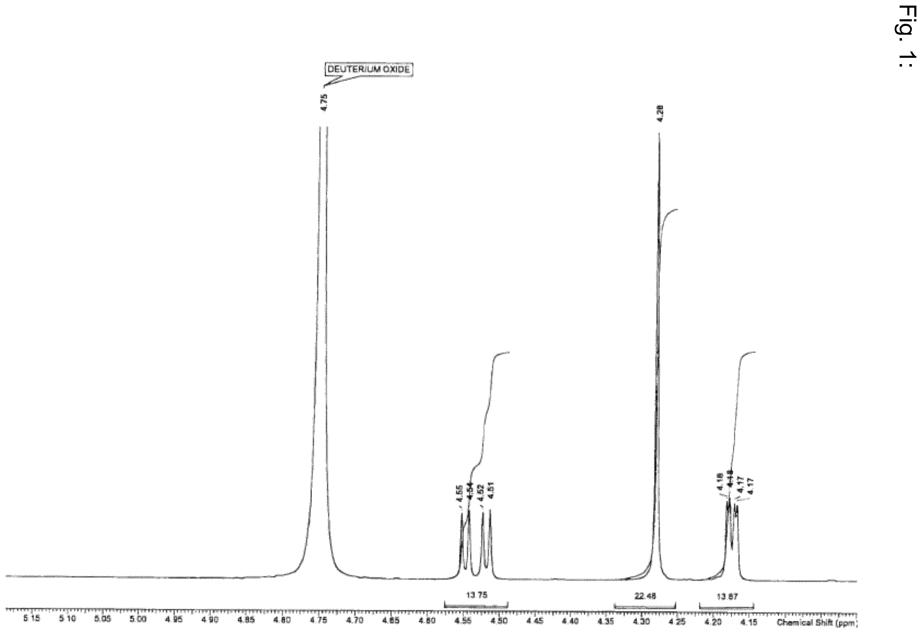

Figure 1 shows the section between 4.0 ppm and 5.2 ppm of the ¹H-NMR spectrum (D₂O, 300 MHz) of the reaction mixture obtained in Example 3 (not shown in figure: maleate at ca. 5.95 ppm).

### Example 1: Preparation of pure potassium phosphotartrate

To prepare pure potassium phosphotartrate, 41.2 g of fully demineralized water and 64.2 g of 85% phosphoric acid were mixed in a 0.5 L double-jacketed reactor equipped with stirrer and reflux condenser. The mixture was adjusted to a pH of 11 with 156.0 g of 42.9% potassium hydroxide solution. 49.0 g of disodium epoxysuccinate were added to this solution, prepared according to the method of Payne/Williams, wherein the disodium salt was isolated after concentration of the reaction mixture and subsequent precipitation with acetone. The mixture was adjusted to a pH of 11 with 42.9% aqueous potassium hydroxide solution and stirred at 83°C for 20 h.

To purify the phosphotartaric acid, the resulting solution was treated at 7°C with a 10% excess of a strongly acidic cation exchange resin Amberjet 1200 (Dow). The resin was removed and washed. The filtrate and water washings were combined and adjusted to pH 7 with 10% lithium hydroxide. The lithium salt mixture was concentrated to 235 g on a rotary evaporator at a bath temperature of at maximum 45°C, adjusted to a pH of 11.7 with 10% lithium hydroxide and left to crystallize overnight at 6°C. The precipitate was filtered off, and the filtrate was treated at 7°C with a ca. 20% excess of a strongly acidic cation exchange resin, Amberjet 1200. The resin was removed and washed. The filtrate and water washings were combined, adjusted to pH 3.6 with 41.8% potassium hydroxide, concentrated to 106 g on a rotary evaporator at a bath temperature of at maximum 45°C and left to crystallize overnight at 6°C. The precipitate was separated by filtration. The purification was repeated once again with correspondingly lower amounts of ion exchange resin, lithium hydroxide and potassium hydroxide.

The filtrate from the latter purification step (potassium salt at pH 3.6) was adjusted to pH 8 with 41.8% potassium hydroxide and evaporated to dryness on a rotary evaporator at a bath temperature of at maximum 45°C. The isolated powder was dried under vacuum over phosphorus pentoxide.

The NMR spectrum of the purified phosphotartrate shows: ¹H-NMR (D₂O, 300 MHz) δ (ppm) = 4.19 (1H, d, -C*H*(OH)COO⁻Na⁺), 4.57 (1H, dd, ((-C*H*(OPO₃²⁻)COO⁻)x3 Na⁺).

### Example 2: Preparation of a phosphotartrate solution of technical quality

68.0 g of fully demineralized water were charged in a 1L double-jacketed reactor equipped with stirrer and reflux condenser. 196.0 g of maleic anhydride were dispersed therein with stirring. 188.0 g of 44.8% KOH were added over 30 min with stirring and cooling, wherein the temperature was maintained below 25°C. 64 g of NaOH were subsequently added and the reaction mixture heated to 60°C. After addition of 6.8 g of Na₂WO₄ x 2H₂O, 240.0 g of 30% H₂O₂ were added over 90 min at a pH of 5.5 to 6, adjusted with 50% NaOH, wherein the temperature was maintained at 60 - 65°C. After a reaction time of 1.5 h, the pH was adjusted to 6.8 with 44.8% KOH.

In the second stage of the synthesis, 348 g of dipotassium hydrogen phosphate were added to the resulting solution. The pH was adjusted to 11.7 with 103 g of 44.8% KOH. The resulting mixture was stirred at 92°C for 16.5 h and then cooled. The total weight was 1352 g. ¹H-NMR analysis of the dried solution gives the following molar composition: Salts of phosphotartaric acid 50.1%, salts of tartaric acid 42.3%, salts of maleic acid 7.6%. The orthophosphate content is calculated from the difference of the amount of phosphate used and the phosphotartrate content determined.

### Example 3: Preparation of a phosphotartrate solution of technical quality

276.33 g of fully demineralized water were charged in a 5L double-jacketed reactor equipped with stirrer and reflux condenser. 1089.75 g of maleic anhydride were dispersed therein with stirring. 1592.66 g of 45.2% KOH were added over 45 min with stirring and cooling, wherein the temperature was maintained below 70°C. The temperature of the reaction mixture was subsequently adjusted to 60°C. After addition of 37.81 g of Na₂WO₄ x 2H₂O, 1448.35 g of a 30% hydrogen peroxide solution were added over 270 min at a pH of 5.0 to 5.6, adjusted with 50% NaOH, wherein the temperature was maintained at 60 - 65°C. Approximately 80% of the 700.56 g of 50% NaOH were added isocratically to the hydrogen peroxide solution over 210 min. The remaining 20% of the aqueous sodium hydroxide solution were added as needed over a post-reaction time of ca. 14 h in order to maintain the pH between 5.0 - 5.6. Finally, the pH was adjusted to 6.8 with a little 45.2% KOH.

The resulting solution was now cooled to ca. 40°C to start the second stage of the synthesis and 1936.87 g of dipotassium hydrogen phosphate were added over 30 min. During this time, excess peroxide slowly decomposed. The pH was raised from ca. 9.4 to 11.7 with 19.83 g of 45.2% KOH and 355.83 g of 50% NaOH. The resulting mixture was stirred for 22.5 h at 88° - 90°C and then cooled. The total weight was ca. 7300 g.

¹H-NMR analysis of the dried solution recorded in D₂O gives the following molar composition: Salts of phosphotartaric acid 53.5%, salts of tartaric acid 44.6%, salts of maleic acid 1.9%. Salts epoxysuccinic acid are below 0.1%.

The free orthophosphate content is calculated from the difference of the phosphate used and the phosphotartrate content determined.

### Examples 4 A-C:

This set of experiments was conducted using different amounts of aqueous potassium hydroxide to adjust the alkalinity of the reaction mixture. From the amounts potassium hydroxide and dipotassium hydrogen phosphate added the overall composition of the orthophosphate source was calculated. The samples were analyzed with regard to their relative molar amount carboxylic acid salts present and yields were calculated therefrom. The results are summarized in table 1.

### Example 4B:

An aqueous solution (pH 7) of a mixed sodium/potassium salt of epoxysuccinic acid was prepared by the protocol of example 2. To 60 g of the thus obtained aqueous solution of epoxysuccinate 23.3 g of K₂HPO₄ were added. By addition of 6.7 g of a 45% by weight aqueous solution of potassium hydroxide the pH was raised from 9.5 to 11.7. The mixture was heated to 92°C for 16.5 h to yield an aqueous solution which was then cooled to 22°C. This solution was freeze-dried and the solid residue was analyzed by ¹H-NMR with regard to the relative molar amounts of maleate salt, epoxysuccinate salt, tartrate salt and phosphotartrate salt. The results are summarized in table 1.

Examples 4a and 4c were conducted by analogy to the procedure of example 4b, using different amounts of 45% by weight aqueous solution of potassium hydroxide.

**Table 1:**

| | | Composition of reaction mixture after 16.5 h with respect to carboxylic acid salts | | | |
|---|---|---|---|---|---|
| Example | Orthophosphate Source | Maleate Salt (mole %) | Epoxysuccinate Salt (mole %) | Tartrate Salt (mole %) | Phosphotartrate (mole %) |
| 4A | K_{2.2}H_{0.8}PO₄ | 3,1 | 9,2 | 40,8 | 46,8 |
| 4B | K_{2.4}H_{0.6}PO₄ | 3,1 | 0,5 | 43,7 | 52,7 |
| 4C | K_{2.6}H_{0.4}PO₄ | 3,1 | 0,4 | 48,4 | 48,1 |

### Examples 5 A-C:

Example 5 was conducted using disodium hydrogen phosphate and different amounts of aqueous caustic soda to adjust the initial alkalinity of the reaction mixture. From the amounts of caustic soda and disodium hydrogen phosphate added the overall composition of the orthophosphate source was calculated. The samples were analyzed with regard to their relative molar amount of carboxylic acid salts present and yields were calculated therefrom. The results are summarized in table 2.

### Example 5B:

An aqueous solution (pH 7) of a mixed sodium/potassium salt of epoxysuccinic acid was prepared by the protocol of example 2. To 75 g of the thus obtained aqueous solution of epoxysuccinate 23.6 g of Na₂HPO₄ were added. By addition of 5.33 g of a 50% weight aqueous solution of caustic soda the pH was raised. The mixture was heated to 92°C for 16.5 h. Initially a thick paste formed, which could not be stirred any longer. When the reaction progressed, the viscosity of the reaction mixture decreased and a yellowish solution was obtained after 16.5 h and then cooled to 22°C. This solution was freeze-dried and the solid residue was analyzed by ¹H-NMR with regard to the relative molar amounts of maleate salt, epoxysuccinate salt, tartrate salt and phosphotartrate salt. The results are summarized in table 2.

Examples 5a and 5c were conducted by analogy to the procedure of example 5b, using different amounts of 50% by weight aqueous solution of caustic soda.

**Table 2:**

| | | Composition of reaction mixture after 16.5 h with respect to carboxylic acid salts | | | |
|---|---|---|---|---|---|
| Example | Orthophosphate Source | Maleate Salt (mole %) | Epoxysuccinate Salt (mole %) | Tartrate Salt (mole %) | Phosphotartrate Salt (mol %) |
| 5A | Na_{2.2}H_{0.8}PO₄ | 3,1 | 2,1 | 38,0 | 56,8 |
| 5B | Na_{2.4}H_{0.6}PO₄ | 3,1 | 0,2 | 38,9 | 57,8 |
| 5C | Na_{2.6}H_{0.4}PO₄ | 3,1 | 0,0 | 42,5 | 54,4 |

## Claims

1. A process for preparing phosphotartaric acid or a salt thereof, wherein a reaction mixture containing epoxysuccinic acid or a salt thereof, an orthophosphoric acid source and water as main constituents is reacted, where the orthophosphoric acid source is selected from phosphoric acid, the salts of phosphoric acid, phosphoric acid anhydrides, the salts of phosphoric acid anhydrides and phosphorpentoxide.

2. The process of claim 1, where the orthophosphoric acid source is an alkali metal salt of phosphoric acid or a mixture of alkali metal salt of phosphoric acid, where the overall composition of the orthoposphoric acid source can be described by the following formula OS:
A_{2+y}H_{1-y}PO₄ (OS)
where A represents an alkali metal ion and y is in the range from > 0 to 1.

3. The process of claim 2, wherein y in formula OS is in the range from 0.1 to 0.8 and in particular in the range from 0.2 to 0.6.

4. The process of any one of claims 2 or 3, where A in formula OS represents Na or K.

5. The process of any one of the preceding claims, wherein the initial pH of reaction mixture is in the range from pH 9.6 to 13.5, in particular from pH 10 to 13 and especially from pH 11 to 12.5.

6. The process of any one of the preceding claims, wherein the reaction is conducted at a temperature of at least 50°C, in particular at least 60°C, especially at least 80°C.

7. The process of any one of the preceding claims, wherein the epoxysuccinic acid or a salt thereof mainly consists of cis-epoxysuccinic acid or a salt thereof.

8. The process of any one of the preceding claims, wherein the concentration of water in the reaction mixture does not exceed 60% by weight and is in particular in the range from 10 to 60% by weight, based on the total weight of the reaction mixture.

9. The process of any one of the preceding claims, wherein the molar ratio of the orthophosphoric acid source, calculated as P atoms to the epoxysuccinic acid is in the range from 1:2 to 20:1, in particular from 1:1.1 to 1.5:1.

10. The process of any one of the preceding claims, additionally comprising the preparation of epoxysuccinic acid or the salt thereof by epoxidation of maleic acid or fumaric acid or salts thereof.

11. The process of claim 10, where the orthophosphoric acid source and the reaction mixture of the epoxidation reaction are mixed and reacted without prior isolation of the epoxysuccinic acid.

## Patentansprüche

1. Verfahren zur Herstellung von Phosphoweinsäure oder eines Salzes davon, wobei man ein Reaktionsgemisch, das Epoxybernsteinsäure oder ein Salz davon, eine Orthophosphorsäure-Quelle und Wasser als Hauptbestandteile enthält, zur Reaktion bringt, wobei die Orthophosphorsäure-Quelle ausgewählt ist aus Phosphorsäure, den Salzen der Phosphorsäure, Phosphorsäureanhydriden, den Salzen von Phoshorsäureanhydriden und Phosphorpentoxid.

2. Verfahren nach Anspruch 1, wobei die Orthophosphorsäure-Quelle ein Alkalimetallsalz der Phosphorsäure oder ein Gemisch von Alkalimetallsalzen der Phosphorsäure ist, wobei die Gesamtzusammensetzung der Orthophosphorsäure-Quelle durch die folgende Formel OS beschrieben werden kann:
A_{2+y}H_{1-y}PO₄ (OS)
wobei A für ein Alkalimetallion steht und y im Bereich von > 0 bis 1 liegt.

3. Verfahren nach Anspruch 2, wobei y in Formel OS im Bereich von 0,1 bis 0,8 und insbesondere im Bereich von 0,2 bis 0,6 liegt.

4. Verfahren nach einem der Ansprüche 2 oder 3, wobei A in Formel OS für Na oder K steht.

5. Verfahren nach einem der vorhergehenden Ansprüche, wobei der anfängliche pH-Wert des Reaktionsgemisches im Bereich von 9,6 bis 13,5 liegt, insbesondere bei pH 10 bis 13 und vor allem bei pH 11 bis 12,5.

6. Verfahren nach einem der vorhergehenden Ansprüche, wobei die Umsetzung bei einer Temperatur von wenigstens 50 °C, insbesondere wenigstens 60 °C, vor allem wenigstens 80 °C durchgeführt wird.

7. Verfahren nach einem der vorhergehenden Ansprüche, wobei die Epoxybernsteinsäure oder ein Salz davon vorwiegend aus cis-Epoxybernsteinsäue oder einem Salz davon besteht.

8. Verfahren nach einem der vorhergehenden Ansprüche, wobei die Konzentration von Wasser in dem Reaktionsgemisch 60% Gewichtsprozent nicht übersteigt und insbesondere im Bereich von 10 bis 60 Gewichtsprozent, bezogen auf das Gesamtgewicht des Reaktionsgemisches, liegt.

9. Verfahren nach einem der vorhergehenden Ansprüche, wobei das Molverhältnis von Orthophoshorsäure-Quelle, gerechnet als P Atome, zu der Epoxybernsteinsäure im Bereich von 1:2 bis 20:1, insbesondere im Bereich von 1:1,1 bis 1,5:1 liegt.

10. Verfahren nach einem der vorhergehenden Ansprüche, zusätzlich umfassend die Herstellung von Epoxybernsteinsäure oder des Salzes davon durch Epoxidierung von Maleinsäure oder Fumarsäure oder Salzen davon.

11. Verfahren nach Anspruch 10, wobei die Orthophosphorsäure-Quelle und das Reaktionsgemisch aus der Epoxidierungsreaktion ohne vorhergehende Isolation der Epoxybernsteinsäure gemischt und umgesetzt werden.

## Revendications

1. Procédé de préparation d'acide phosphotartrique ou d'un sel de celui-ci, dans lequel un mélange de réaction contenant de l'acide époxysuccinique ou un sel de celui-ci, une source d'acide orthophosphorique et de l'eau en tant que constituants principaux réagit, où la source d'acide orthophosphorique est choisie parmi l'acide phosphorique, les sels d'acide phosphorique, des anhydrides d'acide phosphorique, les sels d'anhydrides d'acide phosphorique et le pentoxyde de phosphore.

2. Procédé selon la revendication 1, où la source d'acide orthophosphorique est un sel de métal alcalin d'acide phosphorique ou un mélange de sels de métaux alcalins d'acide phosphorique, où la composition globale de la source d'acide orthoposphorique peut être décrite par la formule OS suivante :
A_{2+y}H_{1-y}PO₄ (OS)
où A représente un ion de métal alcalin et y est dans la plage de > 0 à 1.

3. Procédé selon la revendication 2, dans lequel y dans la formule OS est dans la plage de 0,1 à 0,8 et, en particulier, dans la plage de 0,2 à 0,6.

4. Procédé selon l'une quelconque des revendications 2 ou 3, où A dans la formule OS représente Na ou K.

5. Procédé selon l'une quelconque des revendications précédentes, dans lequel le pH initial du mélange de réaction est dans la plage de pH de 9,6 à 13,5, en particulier de pH 10 à 13 et, en particulier, de pH 11 à 12,5.

6. Procédé selon l'une quelconque des revendications précédentes, dans lequel la réaction est conduite à une température d'au moins 50 °C, en particulier au moins 60 °C, plus particulièrement au moins 80 °C.

7. Procédé selon l'une quelconque des revendications précédentes, dans lequel l'acide époxysuccinique ou un sel de celui-ci est principalement constitué d'acide cis-époxysuccinique ou d'un sel de celui-ci.

8. Procédé selon l'une quelconque des revendications précédentes, dans lequel la concentration d'eau dans le mélange de réaction ne dépasse pas 60 % en poids et est, en particulier, dans la plage de 10 à 60 % en poids, sur la base du poids total du mélange de réaction.

9. Procédé selon l'une quelconque des revendications précédentes, dans lequel le rapport molaire de la source d'acide orthophosphorique, calculé en atomes P par rapport à l'acide époxysuccinique, est dans la plage de 1:2 à 20:1, en particulier de 1:1,1 à 1,5:1.

10. Procédé selon l'une quelconque des revendications précédentes, comprenant en outre la préparation d'acide époxysuccinique ou du sel de celui-ci par époxydation d'acide maléique ou d'acide fumarique ou de sels de ceux-ci.

11. Procédé selon la revendication 10, où la source d'acide orthophosphorique et le mélange de réaction de la réaction d'époxydation sont mélangés et réagissent sans isolement préalable de l'acide époxysuccinique.
